# EUROPEAN PATENT APPLICATION

(11) **EP 2 618 444 A1**
(43) Date of publication of application: **24.07.2013**
(21) Application number: 10857251.2
(22) Date of filing: 14.09.2010
(51) Int. Cl.: H02J 3/00

(54) **SMART GRID ONTOLOGY UPDATE DEVICE**

(71) Applicant: Kabushiki Kaisha Toshiba, Minato-ku Tokyo 105-8001 (JP)
(72) Inventor: MURAYAMA, Hiroshi, Tokyo 105-8001 (JP); HOSOKAWA, Akira, Tokyo 105-8001 (JP); WANG, Lan, Tokyo 105-8001 (JP)
(74) Representative: HOFFMANN EITLE
(86) International application number: PCT/JP2010/065837
(87) International publication number: WO 2012/035617

(57) **Abstract**

According to an embodiment, an ontology update device, which updates a smart grid ontology including an equipment class, individual class properties, or connection information, is provided. The device includes a storage unit configured to store the smart grid ontology including two or three higher-order layers within a domain ontology layer including specs of the equipment class and the properties, a meta-ontology layer including specs of metadata of the class and the properties, and an axiomatic ontology layer including the metadata specs. The device includes an access control unit configured to control access to the ontology so that access is allowed only from a DB or an adapter of a lower-order layer existing in a limited number of specific nodes for a node of each higher-order layer. In addition, the device includes an update unit configured to update the domain ontology layer so that the domain ontology layer is consistent with the meta-ontology layer.

## Description

### Technical Field

An embodiment of the present invention relates to a device for performing an update such as additional correction on a standard ontology of a smart grid.

### Background Art

In maintenance and management of a smart grid associated with a frequent connection change in various Distributed Energy Resource, a medium/small-sized power grid referred to as a microdomain, a device configured to generate power, or a device configured to consume power, it is necessary to maintain and manage electric specs or characteristics of equipment connected to the smart grid through a database (DB) and constantly establish an appropriate connection. With respect to maintenance and inspection of equipment or machinery and an update of equipment or machinery as well as a design update, there is an ontology international standard of power distribution grid equipment known as a common information model (CIM). The CIM includes a systematic description of a class or properties of equipment or machinery related to an electricity distribution grid.

In order to actually maintain and operate the smart grid, it is necessary to access various spec information such as quality or service life of equipment or machinery, environmental characteristics, maintenance, geographical information, and information about a manufacturer or a management organization prescribed by an external standard or protocol in addition to a CIM standard such as an environment-related standard. For access to spec information specified by various external standards other than the CIM, or correction and addition of the CIM using information specified by the above-described external standards and correction and addition outside of the standard, it is necessary to provide a mechanism that enables the CIM to be more smoothly and securely handled on an online DB connected to the smart grid.

### Summary of Invention

### Technical Problem

Accordingly, the present invention provides a smart grid ontology update device capable of smoothly and securely handling a CIM so as to perform correction and addition of the CIM using information specified by an external standard and correction and addition outside of the standard on an online DB connected to a smart grid.

### Solution to Problem

According to an embodiment, an ontology update device, which updates a smart grid ontology including an equipment class, individual class properties, or connection information, is provided. The device includes a storage unit configured to store the smart grid ontology including two or three higher-order layers within a domain ontology (DO) layer including specs of the equipment class and the properties, a meta-ontology (MO) layer including specs of metadata of the class and the properties, and an axiomatic ontology (AO) layer including the metadata specs. The device includes an access control unit configured to control access to the ontology so that access is allowed only from a DB or an adapter of a lower-order layer existing in a limited number of specific nodes for a node of each higher-order layer. In addition, the device includes an update unit configured to update the DO layer so that the DO layer is consistent with the MO layer. Each of the DO layer, the MO layer, and the AO layer includes two parts of a schema and an instance, and a direct instance of a higher-order layer determines a schema of its lower-order layer. A schema of the AO layer is recursively described by its own instance. The equipment class and the properties are stored in separate tables in each of the DO layer, the MO layer, and the AO layer. A description change in a schema of a layer other than a highest-order layer is possible only when descriptions of instances of its higher-order layers are simultaneously or previously changed. By fixing the highest-order layer, the limitation of the ontology layer to two layers of the DO layer and the MO layer is included in the present invention. The update unit updates a schema of the DO layer consistent with an instance of the MO layer through correction or addition of the instance of the MO layer.

### Brief Description of Drawings

FIG. 1 is a diagram illustrating a specific example of an ontology in International Electrotechnical Commission (IEC) 61970.
FIG. 2 is a diagram illustrating four layers of the ontology.
FIG. 3 is a diagram illustrating the architecture of a parcellized ontology model (POM).
FIG. 4 is a diagram illustrating an example of a connection authentication file.
FIG. 5 is a diagram illustrating a configuration in which meta-model layers are distributed and arranged in servers.
FIG. 6 is a diagram illustrating an example of a smart grid in accordance with an embodiment.
FIG. 7 is a diagram illustrating an example of a procedure of control of electricity transmission and distribution substation equipment.
FIG. 8 is a diagram illustrating another example of the procedure of the control of the electricity transmission and distribution substation equipment.
FIG. 9 is a diagram illustrating an example of a smart grid when an additional DO information server and an MO information server are distributed and arranged in addition to a standard CIM server.
FIG. 10 is a diagram illustrating an example of a procedure of control of the electricity transmission and distribution substation equipment.
FIG. 11 is a diagram illustrating another example of the procedure of the control of the electricity transmission and distribution substation equipment.
FIG. 12 is a diagram illustrating a configuration of an AO information server.
FIG. 13 is a diagram illustrating a configuration of an MO information server.
FIG. 14 is a diagram illustrating a configuration of a DO information server.
FIG. 15 is a diagram illustrating a configuration of the electricity transmission and distribution substation equipment.
FIG. 16 is a diagram illustrating a configuration of a power grid use request device.
FIG. 17 is a diagram illustrating a configuration of a power grid management device.
FIG. 18 is a flowchart illustrating a verification procedure of ontology consistency between an MO and a DO.
FIG. 19 is a flowchart illustrating a verification procedure of ontology consistency between an AO and an MO.
FIG. 20 is a diagram illustrating a specific example of a CIM MO.
FIG. 21 is a diagram illustrating a specific example of a CIM DO.
FIG. 22 is a diagram illustrating another example of the CIM DO.
FIG. 23 is a diagram illustrating an instance addition example of an MO.

### Description of Embodiments

This embodiment relates to a DB to be used to store an equipment classification system and individual properties of a class in the classification or connection information referred to as an ontology for enabling an energy management system (EMS) connected to a smart grid or an EMS or other equipment, which intends to make a connection to the smart grid, to access connection specs of other equipment or services connected to the smart grid or other technical specs.

A CIM, which is an ontology international standard of power distribution grid equipment, includes systematic descriptions of an equipment or machinery class or properties related to an electricity distribution grid, and is prescribed in IEC 61968/IEC 61970. In addition to IEC 61968/IEC 61970, there is an IEC 61850 standard. This standard describes specs of equipment within a transformer substation, and basic information necessary for a connection of a narrowly-defined power relation is obtained from the above-described standards. However, in order to actually maintain and operate the smart grid, it is further necessary to access various spec information such as quality or service life of equipment or machinery, environmental characteristics, and maintenance as well as geographical information and information about a manufacturer or a management organization prescribed by a standard or protocol in addition to IEC 61360 or a CIM standard such as an environment-related standard. The above-described information is often described in many languages. It is essential to reasonably and efficiently use the information when an actual power grid is designed and updated such as when the EMS in a foreign power grid is replaced or updated. For access to spec information specified by a standard other than IEC 61968/IEC 61970 or correction and addition of the CIM using information specified by these external standards and correction and addition outside of the standard, a description is currently given using unified modeling language (UML) by a commercial UML tool, XML-RDF is created from the UML, and contents of the UML are set to be included in an electronic document. XML is an abbreviation for extensible markup language and RDF is an abbreviation for resource description framework.

It is necessary to more smoothly and securely handle the current CIM, which is determined through a circulation and voting process over several years, serving as an international standard. Specifically, it is necessary to correct and add its spec definition in an online DB connected to the smart grid.

Therefore, when there is addition of equipment absent in the standard or an update of specs on the standard in this embodiment, the ontology of non-standard or updated equipment is set to be securely switched via the smart grid using an online DB without passing through relatively time-consuming international standardization.

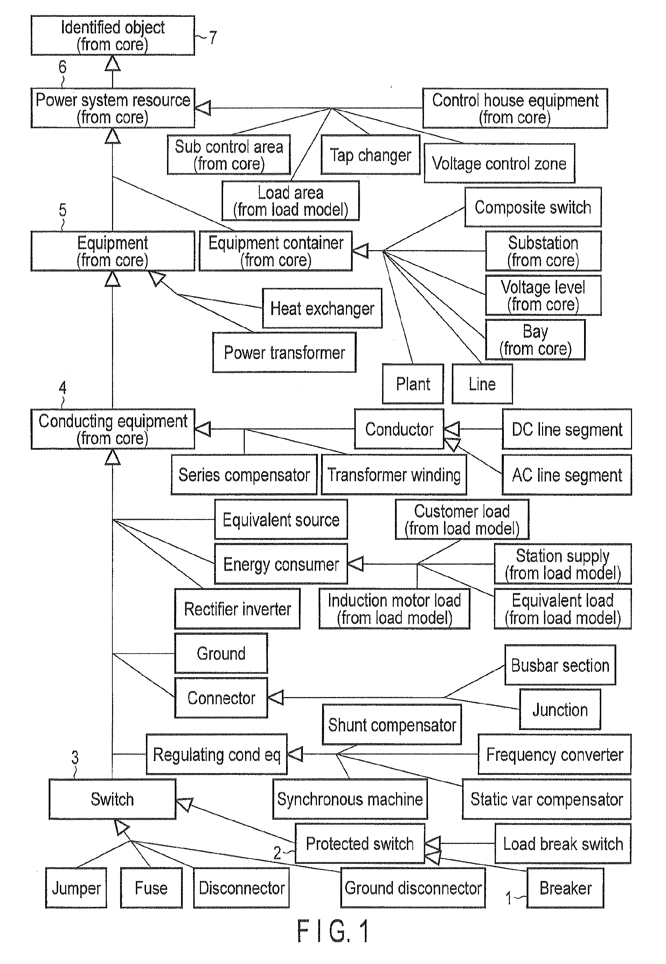

The "ontology" related to the smart grid refers to an information structure in which a class of equipment or machinery and properties characterizing the class are systematically integrated. A specific example of the ontology in IEC 61970 is illustrated in FIG. 1. "Breaker" 1, which is a lowest-order concept of the ontology, is a subtype of "ProtectedSwitch" 2, and "ProtectedSwitch" 2 is a subtype of "Switch" 3. "Switch" 3 is a subtype of "ConductingEquipment" 4. "ConductingEquipment" 4 is a subtype of "Equipment" 5. "Equipment" 5 is a subtype of "PowerSystemResource" 6. "PowerSystemResource" 6 is a subtype of "IdentifiedObject" 7. Actually, properties unique to each class are linked and the properties are handed down from higher order to lower order. In addition, globally unique IDs are assigned to the class of equipment or machinery of one ontology and properties characterizing the class. Similar IDs are also assigned to classification or properties of its higher-order layer.

If an ID of the other side connected in the electricity transmission and distribution grid is known using the above-described ontology, it is possible to recognize a type of equipment of the other side and properties of the other side. In the smart grid, the ontology of its international standard is referred to as a CIM specified in IEC 61968/IEC 61970. However, properties not directly related to power are rarely described as a standard in the CIM. Accordingly, for an actual operation of the smart grid, it is further necessary to access spec information, which specifies properties specified in an ontology standard in addition to the CIM standard such as IEC 61360. In addition, it is necessary to access spec information outside the CIM standard to be used by applying additional correction to the CIM such as quality or service life of equipment or machinery, environmental characteristics, and maintenance, as well as geographical information, a class for describing a manufacturer or a management organization, and properties in relation to materials or components of the equipment or machinery independently prescribed by an enterprise.

To construct the above-described ontology, a separate standard can be used in addition to the CIM. For example, a common dictionary model (CDM) prescribed by IEC 61360-International Organization for Standardization (ISO) 13584 standards (commonly referred to as parts library (PLIB)) is a model to be applied to all industrial fields without being limited to any one field. When an ontology standard is created in each technical field of ISO/IEC, whether the CDM should be preferentially considered as its data model is described in ISO/IEC Guide 77. Unfortunately, because the basic study on the CIM began before the establishment of ISO/IEC Guide 77, its data model is different from that of PLIB. However, format conversion into the data model of PLIB is possible in principle. According to the IEC 61970 standard, the CIM is described using UML by a certain commercial UML tool, XML-RDF is created from the UML, and an electronic file used in specific information exchange is obtained.

On the other hand, ISO 13584-35 or an IEC 62656-1 standard currently under discussion in an extension version of the former is a standard for exchanging the ontology in a tabular format represented by a spreadsheet. As an actual physical file format, the use of CSV, OpenXML (ISO/IEC 29500), XLS, or the like is prescribed in the above-described standards. CSV is an abbreviation for comma separated value.

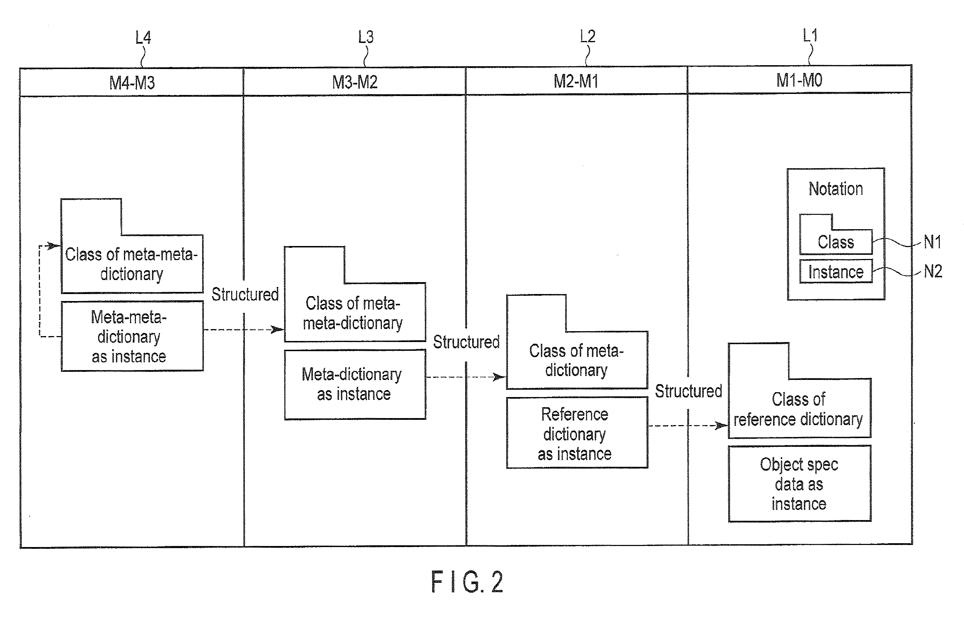

As illustrated in FIG. 2, an ontology DB has four layers to represent ontology data. The four layers are designated as mutually independent logical DBs, managed in separate logical DBs, and an access restriction unique to each layer is provided. Hereinafter, each layer is collectively referred to as a "meta-model layer," and meta-model layers are referred to as "AO," "MO," "DO," and "LD" in descending order.

"AO" is an abbreviation for axiomatic ontology, and is used to describe the following MO and used for all concepts recognized as a class of assumption or information and its definition. For example, the AO is an identifier (ID), a definition, a name, a data type, and a relation to be used to describe concepts or information about an "ID," a "definition," a "name," a "data type," and a "relation."

"MO" is an abbreviation for meta-ontology, and defines a method of describing a DO and its specs. For example, "GUID," "UUID," and "RAID" can be defined as types of IDs, and are distinguished by the IDs. A product name or standard name, a class name, and a property name can be defined as types of names, and are distinguished by the IDs.

"DO" is an abbreviation for domain ontology, and is generally referred to as an ontology and specifies a product classification system for each field and description specs/method of spec values. For example, an automobile is a type of transport vehicle, and a product name, an output (engine power), a maximum speed, and the like are some of the description specs.

"DL" is an abbreviation for domain library, and a library of a product spec value for each field. For example, Ford Model T is a specific product name of the automobile.

In FIG. 2, four meta-model layers L1 to L4 are illustrated and two levels, which are present in each layer, are represented by different notations. The first level is a class N1, and the second level is an instance N2.

A layer L1 is a library of domain objects, and is defined by a domain dictionary. A layer L2 is a domain dictionary defined by meta-classes, that is, a meta-dictionary. A layer L3 is an ontology model as meta-classes, and is defined by meta-meta-classes, that is, a meta-meta-dictionary. A layer L4 is an ontology model as meta-meta-classes, and is explained in a self-explanatory way.

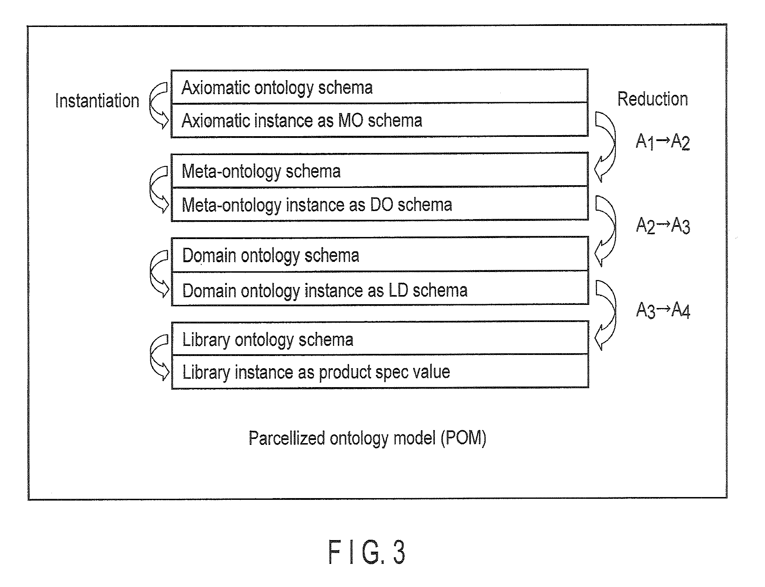

In addition, the architecture of a POM is illustrated in FIG. 3. In FIG. 3, instantiation in each layer and reduction from a certain layer to a separate lower-order layer are illustrated. That is, an instance obtained by instantiating an AO schema is an axiom instance as an MO schema. A schema obtained by reducing the axiom instance is an MO schema. An instance obtained by instantiating the MO schema is an MO instance as a DO schema. A schema obtained by reducing the MO instance is a DO schema. An instance obtained by instantiating the DO schema is a DO instance as an LD schema. A schema obtained by reducing the DO instance is a library ontology schema. An instance obtained by instantiating the library ontology schema is a library instance as product spec values.

In FIG. 2, notations of M1-M0, M2-M1, and the like are levels representing abstraction levels of layers in which notations of meta-modeling levels disclosed in a meta-object facility (MOF: object modeling group) standard, which specifies UML language, are combined. That is, the above-described AO corresponds to M4-M3, MO corresponds to M3-M2, DO corresponds to M2-M1, and LD corresponds to M1-M0.

There is a plurality of physical copies of one logical meta-model layer by independently managing each meta-model layer between layers, and it is possible to arrange and manage the plurality of physical copies in different servers. Accordingly, there are combinations of physical copies placed in a plurality of different servers between layers.

In addition, when a property used in a certain class of a lower-order layer is not prescribed as an instance of a higher-order layer, the property is not processed and only processing of a data value of a property prescribed in an instance of the higher-order layer is performed. There are two levels of a schema and an instance in each meta-model layer. In terminology for describing a configuration of a spreadsheet in ISO 13584-35, there are two sections of a schema section and a data section in one DB.

In this embodiment, there is a file or DB in which access right information for an ontology is managed in addition to the meta-model layer. In the file or DB, one or more IDs of a lower-order meta-model layer capable of being combined with an ontology of the layer and an ID of a logical DB in which read or read/write (hereinafter, R/W) access is possible is described in the data section. Further, configuration information indicating which AO layer is combined with which MO layer and which MO layer is combined with which DO layer in the DB connected to the smart grid is transmitted as a message or file from a sender to a receiver side.

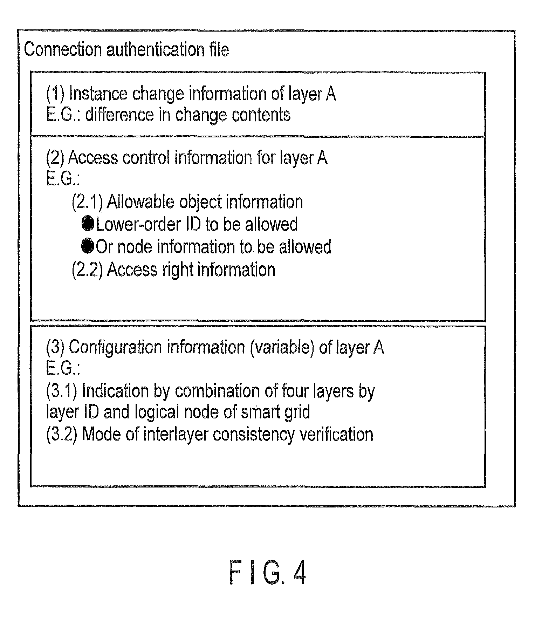

An example of the above-described connection authentication file (transaction information) is illustrated in FIG. 4. The connection authentication file includes (1) instance change information of a layer A (e.g., a difference in change contents), (2) access control information for the layer A, and (3) configuration information (variable) of the layer A. (1) Instance change information of the layer A, for example, is a change in change contents. (2) Access control information for the layer A, for example, is (2.1) allowable object information (allowed lower-order layer ID or allowed node information) and (2.2) access right information. (3) Configuration information (variable) of the layer A, for example, includes (3.1) indication by a combination of four layers by a layer ID and a logical node of a smart grid and (3.2) mode of interlayer consistency verification.

Further, the access right information, particularly, ID information of a logical user related to R/W access right, is assumed to be strictly protected. As a protection method including specific encryption, various methods can be adopted. It is assumed that whether a rule described in an instance of an upper layer is applied when a schema of a certain layer is additionally corrected, whether the additional correction of the schema corresponds to a subset of the rule described in the instance of the upper layer, or whether the actual additional correction of the schema is allowed in a common set of the rule described in the instance and contents of the additional correction of the schema is indicated by a transmission side by providing an identification flag between layers along with the above-described configuration information.

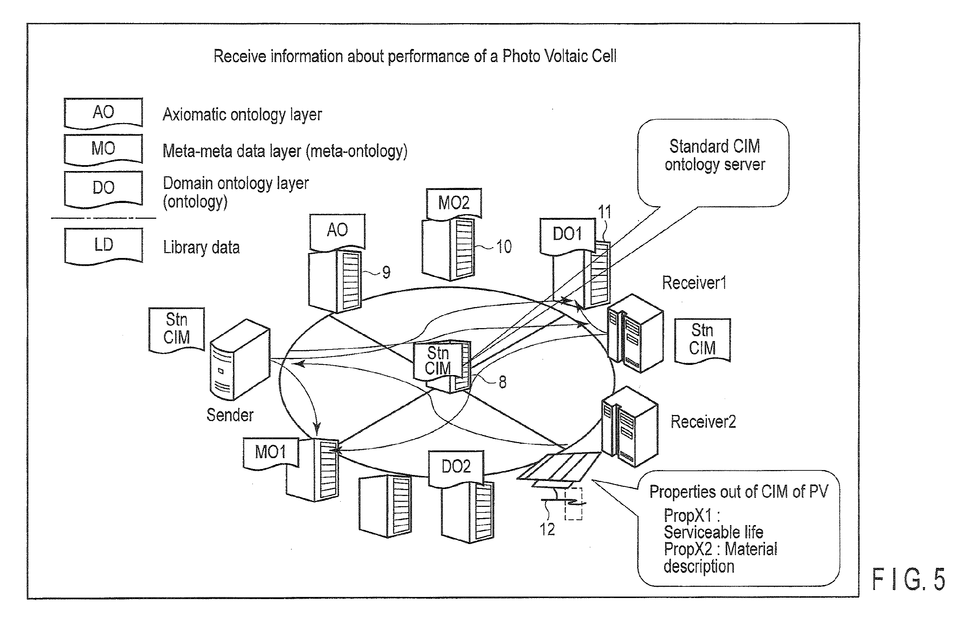

As described above, in this embodiment, each meta-model layer is independently managed between layers. In this case, there is a plurality of physical copies of one logical meta-model layer, and it is possible to arrange and manage the plurality of physical copies in different servers. An example of this case is illustrated in FIG. 5. In FIG. 5, AO represents an AO layer, MO represents a meta/metadata layer (MO), DO represents a DO layer (ontology), and LO represents library data. In FIG. 5, there are an AO server 9, a plurality of MO servers 10, and a plurality of DO servers 11 in addition to a standard CIM server (standard CIM ontology server) 8. By accessing the above-described servers, it is possible to obtain information about properties not prescribed in the standard CIM server 8 for a photovoltaic cell (PV) 12. That is, for the photovoltaic cell (PV) 12, "PropX1: Serviceable life" and "PropX2: Material description" can be obtained as properties out of the CIM.
(1) An embodiment relates to a DB to be used to store an equipment class and individual properties of the class or connection information referred to as an ontology for enabling an EMS or other equipment, which is connected to a smart grid or intends to make a connection to the smart grid, to access connection specs of other equipment or services connected to the smart grid or other technical specs. The smart grid ontology in accordance with this embodiment has a basic structure of a layer-specific independent ontology.

The basic structure is assumed to include,
(i) on the top of a catalog layer on which a property value of equipment is actually recorded, a maximum of three higher-order layers of:
(ii) a DO layer including specs of an equipment class and properties,
(iii) an MO layer including specs of metadata of the class and properties, and
(iv) an AO layer including the metadata specs.

Each of the above-described DO, MO, and AO layers is formed by two parts of a schema and an instance, and an instance of a higher-order layer determines a schema of its lower-order layer.

The schema of the highest-order layer, that is, the AO layer, is recursively described according to its own instance.

In addition, in each of the above-described DO, MO, and AO layers, the equipment class and properties are separated and stored in separate tables (in which the above-described higher-order layer instance determines an actual structure). For the separate tables, separate access to each table is performed at the time of access control as will be described later. For example, tables having separate formats are regarded to be the separate tables, and referred to as separate files. These may be logically and physically different.

A description change in schemas of layers other than the highest-order layer is possible only when descriptions of instances of their higher-order layers are simultaneously or previously changed.

The above-described DO, MO, and AO layers are managed as DBs logically or physically different in units of layers.

For a DB or adapter of a lower-order layer capable of accessing one node of each layer, allowed access control information accessible only from a DB or adapter of a lower-order layer present in a limited number of specific nodes is described in a file or DB. Access control is performed according to the access control information.

By correcting or adding an instance of the MO layer in relation to a device for performing the above-described ontology update, it is possible to update a schema of the DO consistent with the instance of the MO layer. In this case, it is preferable to make a determination of the consistency. In addition, in relation to a method of determining the consistency, it is preferable to provide two modes of exact and partial matching and improve safety and flexibility.

### (2) Extraction of Difference

In the above-described ontology update device, correction or addition in a certain layer of the above-described ontology includes:
(a) addition or correction as a CIM standard for the layer or a plurality of higher-order layers thereof,
(b) addition or correction of equipment specs specified by another standard, and
(c) addition or correction of equipment specs outside of the standard.

When it is necessary to transmit the above-described addition or correction to other users, only an instance of a difference is separated from a standard instance or an already shared instance for a class definition or a property definition related to the addition or correction. A transmission side transmits an instance of a difference and an ID (which may be attached for understanding of a human using some or all related metadata itself) of metadata related to the instance to a reception side by applying format conversion including compression and encryption. The reception side restores the instance of the difference by analyzing the instance and performing inverse conversion, and further incorporates the restored instance into a common instance. Through the above-described information exchange, it is possible to construct an ontology exceeding contents specified by the standard in the smart grid.

### (3) Separation of DB that Stores Standard Ontology and DB that Stores Difference

A difference instance set is stored in a separate server different from a server that stores a standard ontology connected to the smart grid.

For correction or addition in a certain layer, it is necessary to change a schema of the layer. When only an instance of a difference in its higher-order layer and the ID of the metadata related to the instance (collectively referred to as a difference instance set) are transmitted from the transmission side to the reception side, an address of a server storing the difference instance set is transmitted and received between the transmission side and the reception side. This enables correction or addition for contents specified by a standard ontology and correction or addition outside of a standard to be exchanged without directly changing contents of a DB storing the standard ontology.

### (4) Formation of Plurality of DBs that Store Difference

A plurality of servers storing the difference instance set may be provided and one server to be actually selected may be transmitted and received between the transmission side and the reception side.
(5) According to a request from a normal DB or adapter not including a function related to the above-described ontology update in the smart grid, it is only necessary to synthesize information about correction or addition for contents specified by a standard ontology and correction or addition outside of a standard into one system, convert the synthesized information into an RDF format or the like, and transmit the converted information.

### (Advantages of Embodiment)

According to the above-described configuration, it is possible to virtually change a CIM without changing a standardized CIM by dividing the CIM into an MO and a DO for description, arranging the MO and the DO of the CIM in different logical nodes (servers), and using a DO into which both correction addition of the DO and the original DO are integrated. It is possible to confirm whether there is violation/omission of a description rule for a changed virtual CIM by checking the DO for the MO. Thereby, safety is increased. A plurality of MOs and DOs may be arranged. It is possible to prevent a person other than corresponding users from inappropriately changing the CIM by changing a combination of the MO and the DO for each other party of provision and use of power requiring a change in the virtual CIM, changing a user name, a password, and an encoding key for accessing content of the MO and the DO, and transmitting them to parties of power supply and demand.

Hereinafter, the embodiment will be described with more specific application examples.

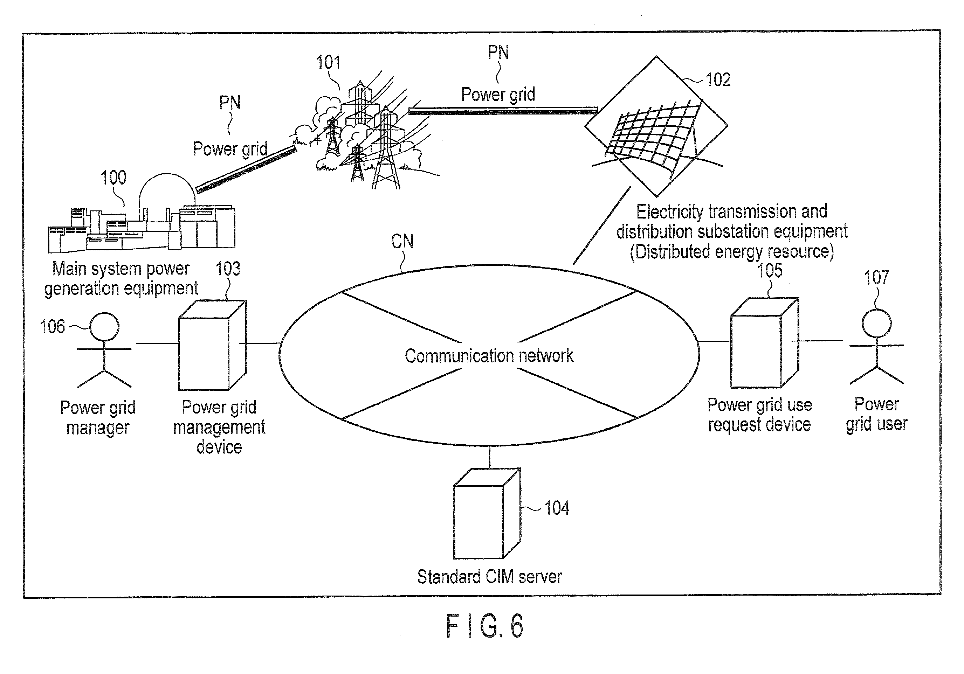

FIG. 6 illustrates an example of the smart grid in accordance with the embodiment. The smart grid includes a power grid PN and a communication network CN. The power grid PN includes main system power generation equipment 100 and electricity transmission and distribution substation equipment 101 and 102, and the communication network CN includes a power grid management device 103, a standard CIM server 104, and a power grid use request device 105. In FIG. 6, an electricity transmission and distribution grid manager 106 includes an organization or person owning an electricity transmission and distribution grid, a management organization or person thereof, and equipment to be operated thereby. An electricity transmission and distribution user 107 includes an organization or person using the electricity transmission and distribution grid so as to transmit, supply/distribute, accumulate, or consume electricity and equipment to be operated thereby (an owner of the main system power generation equipment 100 or a Distributed Energy Resource 102 belonging thereto). The electricity transmission and distribution substation equipment 101 and 102 is power generation equipment, substation equipment, power supply/distribution equipment, a storage device, and the like, and includes a device configured to purchase power from a power generator or transmitter and distribute the purchased power to consumers. The consumers are an organization or a human group that consumes power by converting the power into other energy forms (motive power, heat, light, and the like), and a whole is intended to act as one organization, and for example, includes manufacturers, railroad business operators, and general consumers.

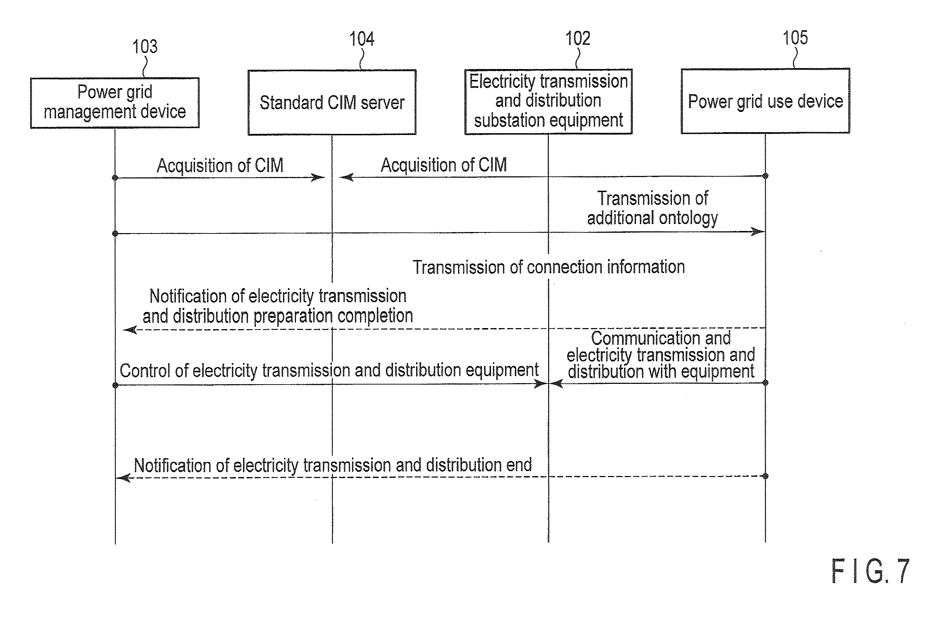

FIG. 7 is a diagram illustrating a procedure of control of the electricity transmission and distribution substation equipment when a central server manages only a CIM obtained as the international standard. This embodiment can be relatively easily implemented. An electricity distribution information transmission and reception procedure including notification and sharing of a change in a DO between partners is as follows. The example of FIG. 7 is the case in which the power grid management device 103 transmits an additional ontology to the power grid use device 105.

First, the power grid management device 103 and the power grid use device 105 acquire the CIM from the standard CIM server 104. Next, an additional ontology and connection information are transmitted from the power grid management device 103 to the power grid use device 105. The power grid use device 105 receiving the additional ontology and the connection information notifies the power grid management device 103 of notification of electricity transmission and distribution preparation completion. According to this, the power grid management device 103 controls the electricity transmission and distribution substation equipment 102. On the other hand, the power grid use device 105 performs communication and electricity transmission and distribution with the electricity transmission and distribution substation equipment 102. When the electricity transmission and distribution end, the power grid use device 105 notifies the power grid management device 103 of the electricity transmission and distribution end.

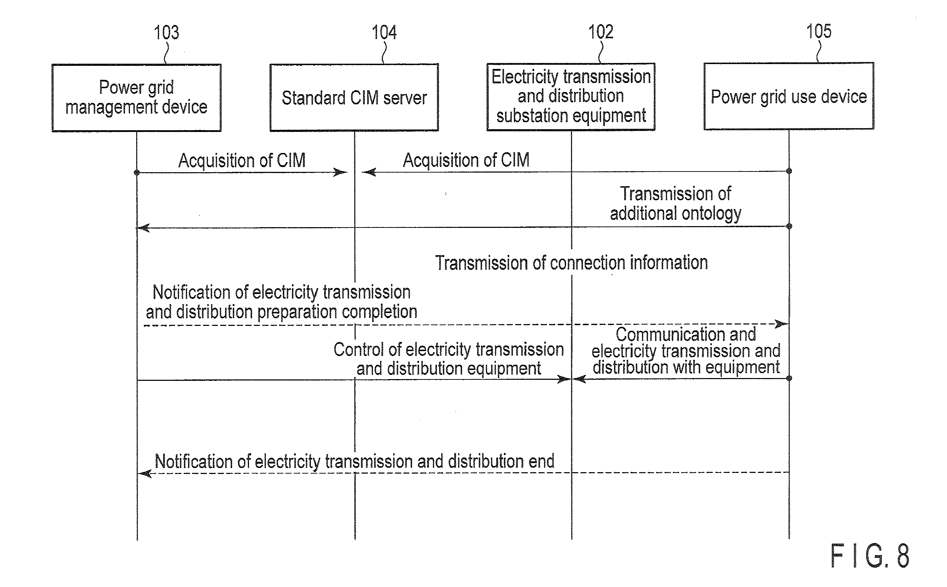

FIG. 8 corresponds to the case in which the central server manages only the CIM as in the case of FIG. 7, but is different from the case of FIG. 7 in that an additional ontology and connection information are transmitted from the power grid use device 105 to the power grid management device 103 without being transmitted from the power grid management device 103 to the power grid use device 105. This corresponds to the case in which the power grid use device 105 stores an ontology of a difference from the CIM.

In application examples illustrated in FIGS. 7 and 8, the change in the DO is not associated with the change in the MO. Next, an application example in which the change in the DO is associated with the change in the MO will be described.

Although the standard CIM is a type of DO, notation in only English is assumed. Accordingly, for example, when the CIM is used in a non-English-speaking country, for example, Japan or China, and the smart grid is operated, there is a disadvantage or inconvenience in that a name or definition is not described in Japanese or Chinese. For example, although "Braker" can be described by designating its specific product name as a value in the DL, it is difficult to originally describe "Certain Breaker" because there is no description field of a non-English name when a product name is set to be represented in Japanese or Chinese. In the standard CIM, a data type is present, but no unit to be used to designate the data type is prescribed. Accordingly, at present, a unit outside the CIM should be defined and this should be agreed upon. Therefore, by providing description specs indicating how to represent the unit in the MO, it is possible to designate a unit to be used for a specific description in the description of the DO (a change in the MO associated with a change in the DO). In the DL, a performance value based on a unit selected in the DO is described.

On the other hand, the case in which the change in the DO is not associated with the change in the MO, for example, is the addition of "Low-voltage switch," which is one of lower-order concepts of "Switch," or the like. This is performed by only the change in the DO, and the change in the MO is not necessary. However, specs of properties of its equipment should be defined in a range of a spec description rule of existing properties.

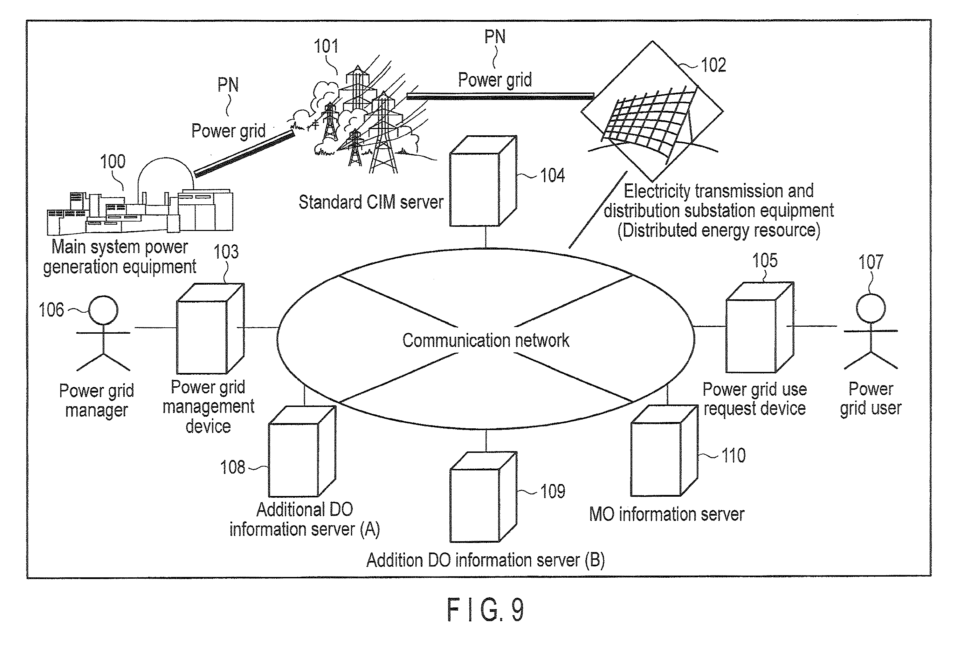

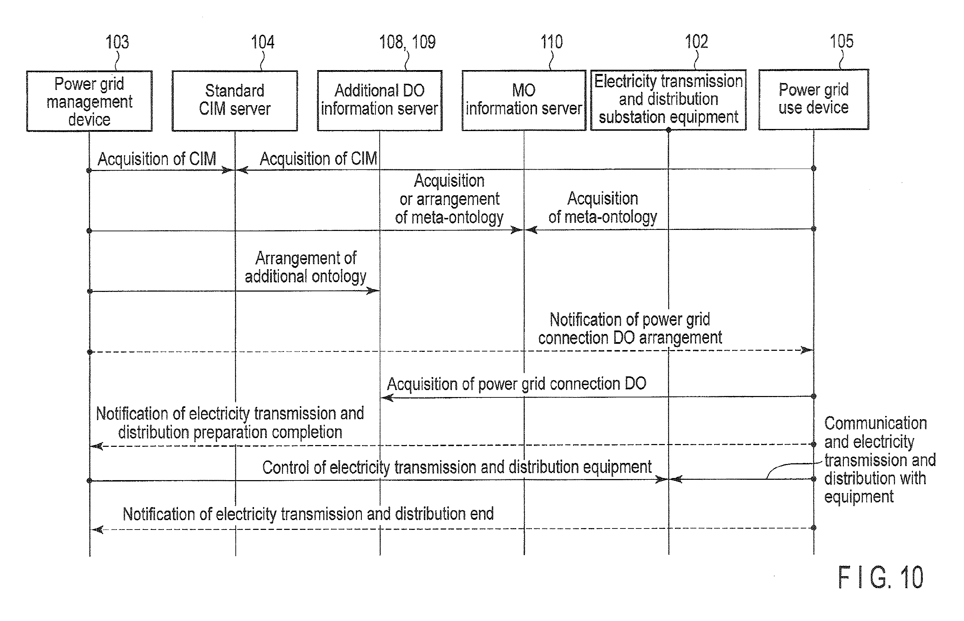

FIG. 9 illustrates an example of a smart grid when an additional DO information server and an MO information server are distributed and arranged in addition to the standard CIM server. FIG. 10 is a diagram illustrating a procedure of control of the electricity transmission and distribution substation equipment when an additional DO information server and an MO information server are distributed and arranged. The example of FIG. 10 is the case in which the MO is arranged in an MO information server 110 and the DO is arranged in additional DO information servers 108 and 109. Hereinafter, the case in which an additional ontology for the CIM is transmitted from the power grid management device 103 to the power grid use device 105 with respect to transmission and reception of electricity transmission and distribution information associated with a change in the DO and the MO will be described.

First, each of the power grid management device 103 and the power grid use device 105 acquires the CIM from the standard CIM server 104. Next, the power grid management device 103 acquires or arranges the MO with the MO information server 110. The power grid use device 105 acquires the MO from the MO information server 110. Next, the power grid management device 103 arranges an additional ontology in the additional DO information servers 108 and 109. Further, the power grid management device 103 notifies the power grid use device 105 of power grid connection DO arrangement. According to this, the power grid use device 105 acquires a power grid connection DO from the additional DO information servers 108 and 109, and notifies the power grid management device 103 of electricity transmission and distribution preparation completion. Thereby, the power grid management device 103 controls the electricity transmission and distribution substation equipment 102. In addition, the power grid use device 105 performs communication and electricity transmission and distribution with the electricity transmission and distribution substation equipment 102. When the electricity transmission and distribution end, the power grid use device 105 notifies the power grid use device 105 of the electricity transmission and distribution end.

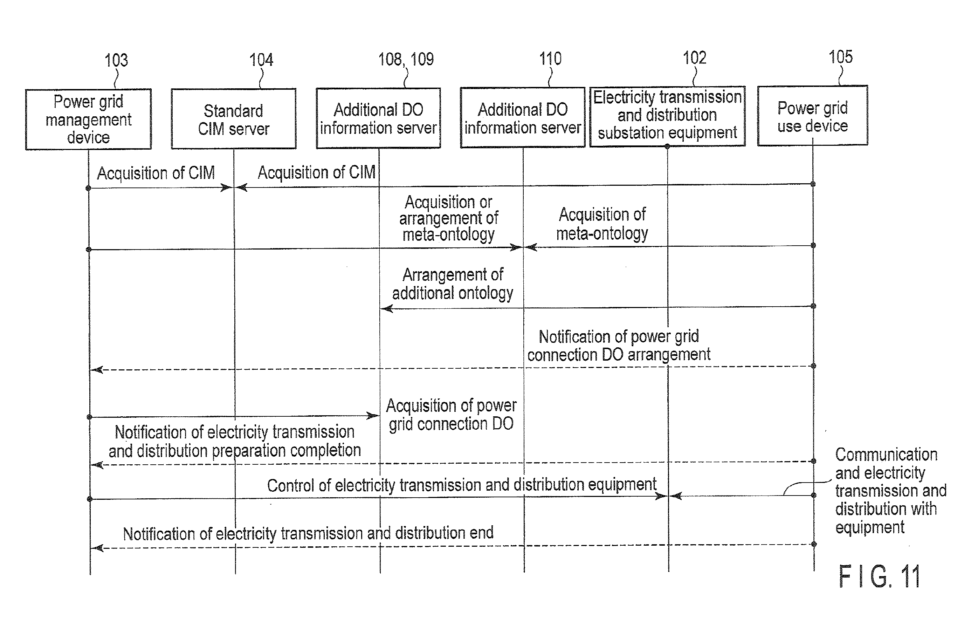

FIG. 11 corresponds to the case in which an additional DO information server and an MO information server are distributed and arranged as in the case of FIG. 10, but is different from the case of FIG. 10 in that in that an additional ontology is transmitted from the power grid use device 105 to the power grid management device 103 without being transmitted from the power grid management device 103 to the power grid use device 105. This corresponds to the case in which the power grid use device 105 stores an ontology of a difference from the CIM.

Here, configurations of the AO information server, the MO information server, the additional DO information server, the electricity transmission and distribution substation equipment, the power grid use request device, and the power grid management device will be described.

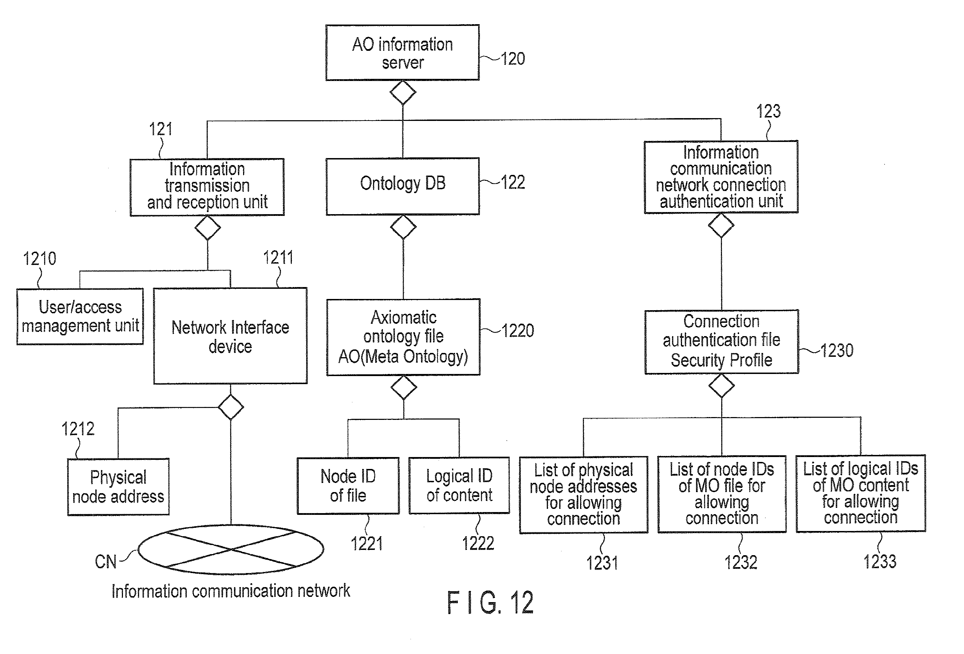

As illustrated in FIG. 12, the AO information server 120 includes an information transmission and reception unit 121, an ontology DB 122, and an information communication network connection authentication unit 123. The information transmission and reception unit 121 includes a user/access management unit 1210 and a network interface device 1211. The network interface device 1211 has a unique physical node address and is connected to an information communication network CN. The ontology DB 122 stores an AO, that is, a file 1220 of the AO. The AO file 1220 includes a node ID 1221 of the file and a logical ID 1222 of content. The information communication network connection authentication unit 123 has a connection authentication file (security profile) 1230. The connection authentication file 1230 records a list 1231 for a physical node address for allowing a connection, a list 1232 for a node ID of an MO file for allowing the connection, and a list 1233 for a logical ID of MO content for allowing the connection.

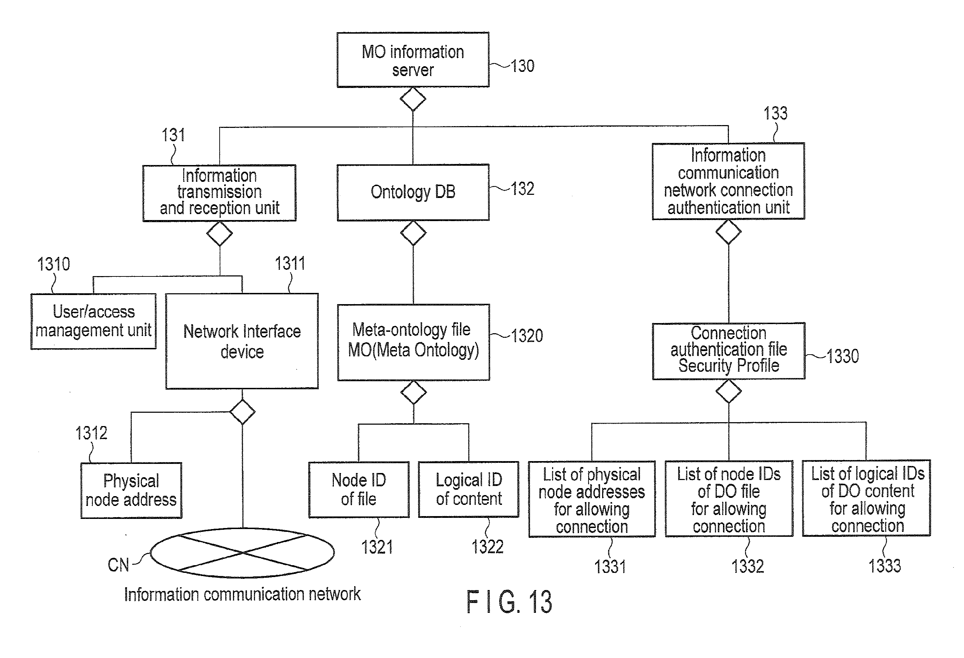

As illustrated in FIG. 13, the MO information server 130 includes an information transmission and reception unit 131, an ontology DB 132, and an information communication network connection authentication unit 133. The information transmission and reception unit 131 includes a user/access management unit 1310 and a network interface device 1311. The network interface device 1311 has a unique physical node address and is connected to an information communication network CN. The ontology DB 132 stores an MO, that is, a file 1320 of the MO. The MO file 1320 includes a node ID 1321 of the file and a logical ID 1322 of content. The information communication network connection authentication unit 133 has a connection authentication file (security profile) 1330. The connection authentication file 1330 records a list 1331 for a physical node address for allowing a connection, a list 1332 for a node ID of a DO file for allowing the connection, and a list 1333 for a logical ID of DO content for allowing the connection.

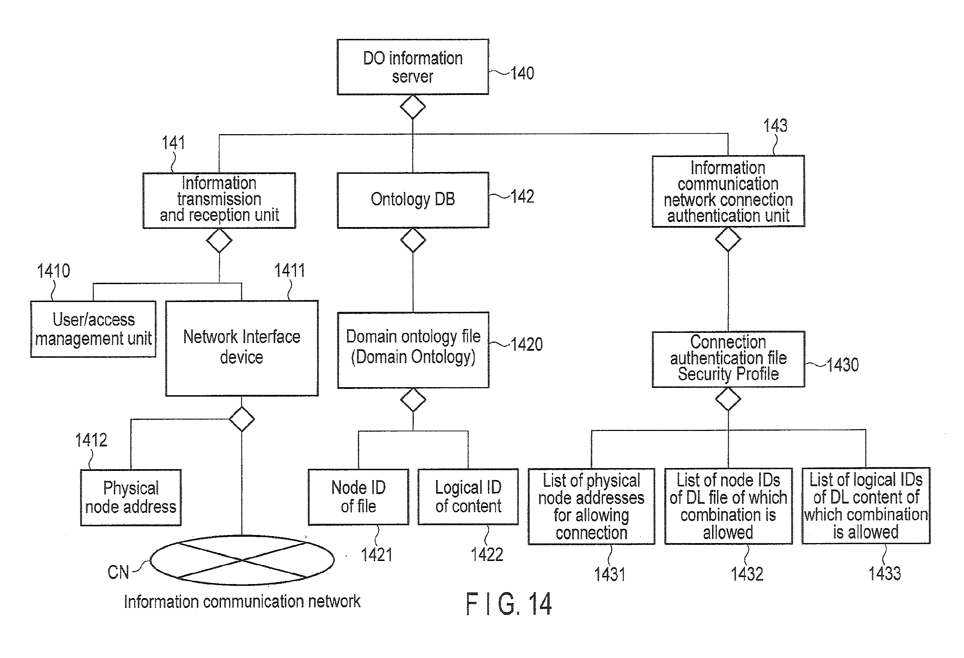

As illustrated in FIG. 14, the DO information server 140 includes an information transmission and reception unit 141, an ontology DB 142, and an information communication network connection authentication unit 143. The information transmission and reception unit 141 includes a user/access management unit 1410 and a network interface device 1411. The network interface device 1411 has a unique physical node address and is connected to an information communication network CN. The ontology DB 142 stores a DO, that is, a file 1420 of the DO. The MO file 1420 includes a node ID 1421 of the file and a logical ID 1422 of content. The information communication network connection authentication unit 143 has a connection authentication file (security profile) 1430. The connection authentication file 1430 records a list 1431 for a physical node address for allowing a connection, a list 1432 for a node ID of a DL file for allowing the connection, and a list 1433 for a logical ID of DL content for allowing the connection.

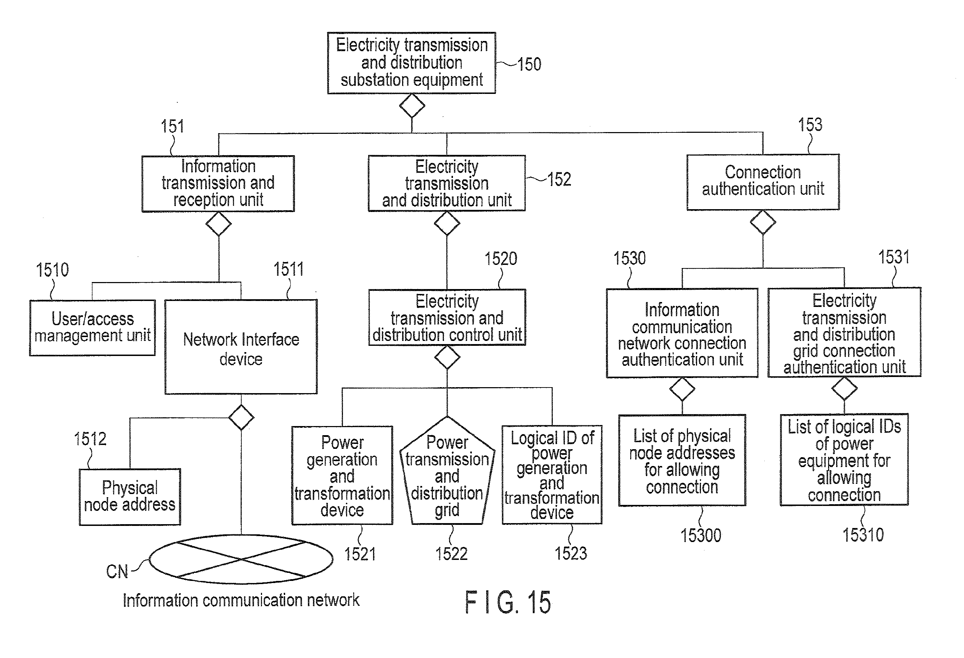

As illustrated in FIG. 15, the electricity transmission and distribution substation equipment 150 includes an information transmission and reception unit 151, an electricity transmission and distribution unit 152, and a connection authentication unit 153. The information transmission and reception unit 151 includes a user/access management unit 1510 and a network interface device 1511. The network interface device 1511 has a unique physical node address and is connected to an information communication network CN. The electricity transmission and distribution unit 152 has an electricity transmission and distribution control unit 1520. The electricity transmission and distribution control unit 1520 is connected to a power generation and transformation device 1521 and a power transmission and distribution grid 1522, and has a logical ID of the power generation and transformation device 1521.

The connection authentication unit 153 includes an information communication network connection authentication unit 1530 and an electricity transmission and distribution connection authentication unit 1531. The information communication network connection authentication unit 1530 has a list 15300 for a physical node address for allowing a connection, and the electricity transmission and distribution connection authentication unit 1531 has a list 15310 for a logical ID of power equipment for allowing the connection.

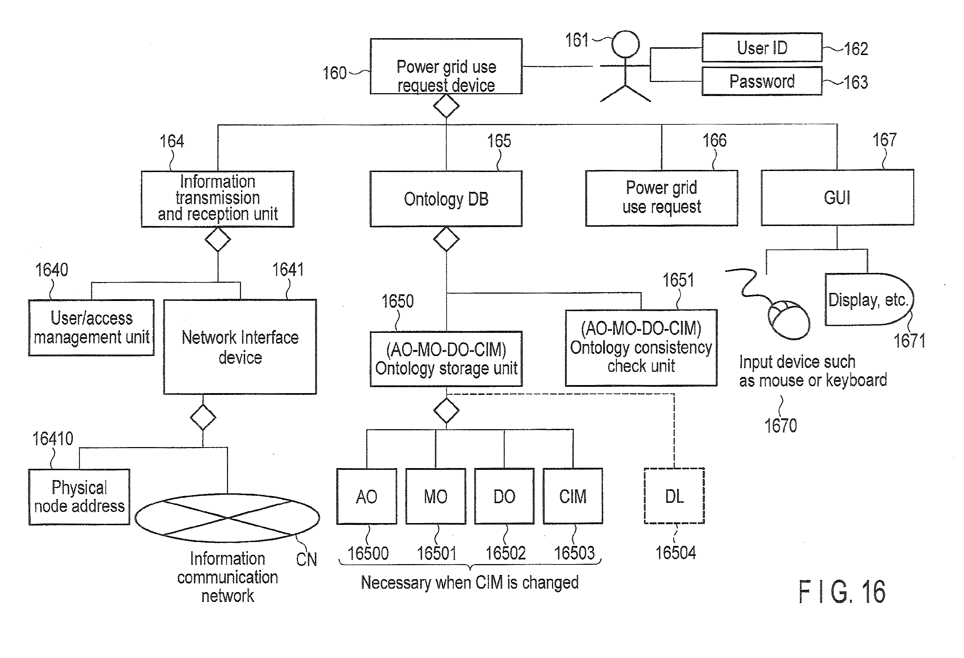

As illustrated in FIG. 16, a power grid use request device 160 is a terminal or the like operable by a power grid use requester (user) 161, and the power grid use requester 161 is managed by a user ID 162 and a password 163. The power grid use request device 160 includes an information transmission and reception unit 164, an ontology DB 165, and a graphical user interface (GUI) 167 for indicating a power grid use request 166. An input device 1670 such as a mouse or a keyboard and an output device 1671 such as a display are connected to the GUI 167. The information transmission and reception unit 164 includes a user/access management unit 1640 and a network interface device 1641. The network interface device 1641 has a unique physical node address and is connected to an information communication network CN. The ontology DB 165 includes an (AO-MO-DO-CIM) ontology storage unit 1650 and an (AO-MO-DO-CIM) ontology consistency check unit 1651. An AO 16500, an MO 16501, a DO 16502, and a CIM 16503 are stored in the ontology storage unit 1650. Further, a DL 16504 is stored in the ontology storage unit 1650.

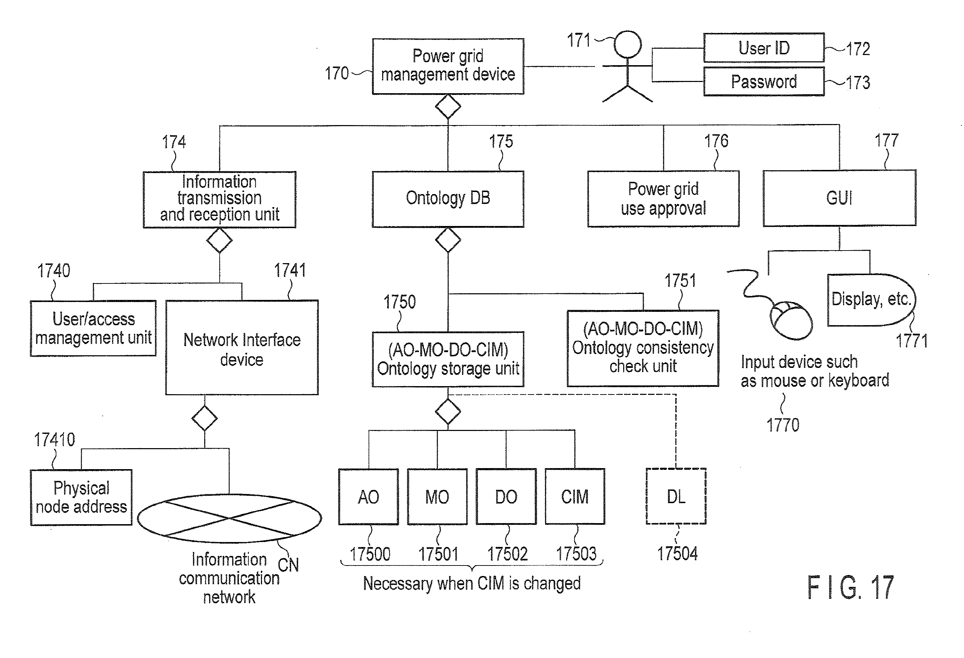

As illustrated in FIG. 17, a power grid management device 170 is a terminal or the like operable by a power grid manager (user) 171, and the power grid manager 171 is managed by a user ID 172 and a password 173. The power grid management device 170 includes an information transmission and reception unit 174, an ontology DB 175, and a GUI 177 for indicating power grid use approval 176. An input device 1770 such as a mouse or a keyboard and an output device 1771 such as a display are connected to the GUI 177. The information transmission and reception unit 174 includes a user/access management unit 1740 and a network interface device 1741. The network interface device 1741 has a unique physical node address and is connected to an information communication network CN. The ontology DB 175 includes an (AO-MO-DO-CIM) ontology storage unit 1750 and an (AO-MO-DO-CIM) ontology consistency check unit 1751. An AO 17500, an MO 17501, a DO 17502, and a CIM 17503 are stored in the ontology storage unit 1750. Further, a DL 17504 is stored in the ontology storage unit 1750.

Next, a configuration of a connection authentication file to be used for connection authentication of the information communication network CN will be described. The connection authentication file includes (1) a list of logical IDs of a DO consistent with a corresponding MO, (2) a list (for example, uniform resource IDs (URIs)) of logical nodes (DO) of a lower-order layer for allowing a connection to a node in which the MO is placed, and (3) a physical address (for example, a media access control (MAC) address) of a lower-order layer for allowing the connection to the node in which the MO is placed. Further, in the connection authentication, a device that analyzes appropriateness of an account and a password of a person who allows the connection and a device that analyzes a key for releasing encoded MO content are also used. For this, for example, a method to be generally widely performed such as a lightweight directory access protocol (LDAP) can be used.

In terms of a difference between the above-described (1) and (2), the URI is a name of a file on a systematically described network (on the normal Internet), and is unrelated to an ID (MO ID) of content described in the file. Accordingly, even when the URI is the same, contents of the file are replaced and an ID of the MO described therein is changed. In terms of a difference between the above-described (2) and (3), the logical node can be assigned as the same logical node, for example, even when a MAC address is changed as a physical node. The physical node is physically unique to a machine. The above-described (1) and (2) are examples of logical nodes, and one thereof may be used as the embodiment. The above-described (3) can be omitted as a specific embodiment.

Next, the ontology consistency check unit will be described.

The ontology consistency check units between the AO and the MO, between the MO and the DO, and between the DO and the DL may be located on the AO, MO, and DO information servers, respectively. The ontology consistency check units may be located on the power grid use request device, which requests a change in the CIM, or the power grid management device. When the ontology consistency check units are located on the AO, MO, and DO information servers, the power grid user or the power grid manager is not notified of a position of inconsistency. In the following ontology consistency verification procedure, it is assumed that user/access management (verification by a user account and password) to be performed in normal access management of information equipment is completed in advance.

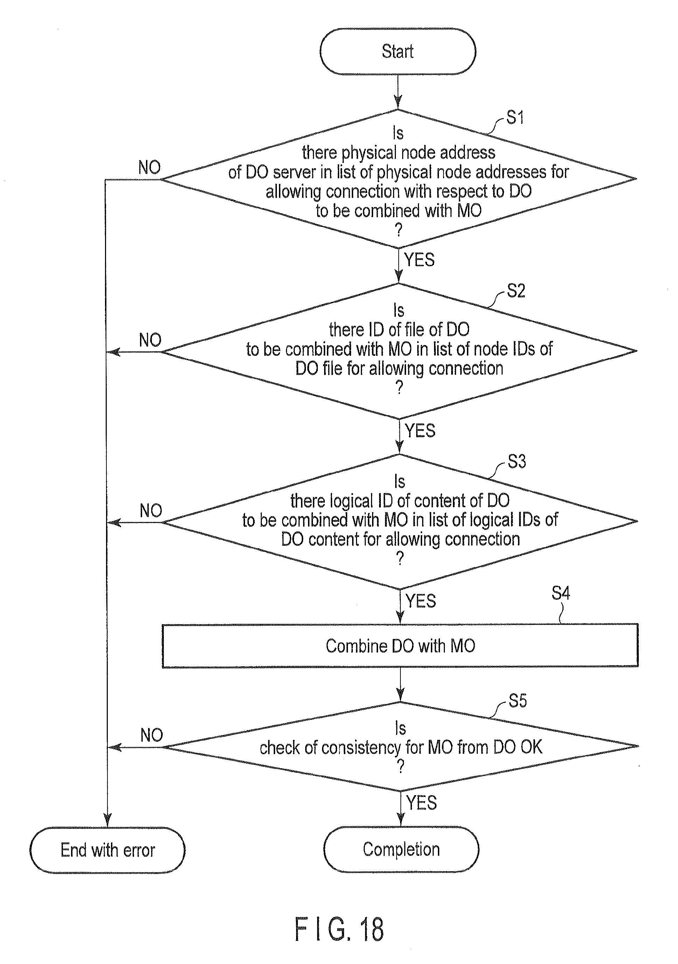

The ontology consistency verification procedure between the MO and the DO will be described with reference to FIG. 18. In step S1, for the DO to be combined with the MO, it is determined whether there is a physical node address of the DO information server in a list of the physical node addresses for allowing a connection. When there is no physical node address, the process ends with an error. In step S2, it is determined whether there is an ID of a file of the DO to be combined with the MO in a list of node IDs of the DO file for allowing the connection. If there is no file ID, the process ends with an error. In step S3, it is determined whether there is a logical ID of content of the DO to be combined with the MO in a list of the logical IDs of the DO content for allowing the connection. When there is no logical ID of the content, the process ends with an error. When all the above determinations are "YES," the DO is combined with the MO in step S4. Next, in step S5, the check of the consistency for the MO from the DO is performed. When the check result is OK, the process is completed. When the MO is not consistent with the DO, the process ends with an error.

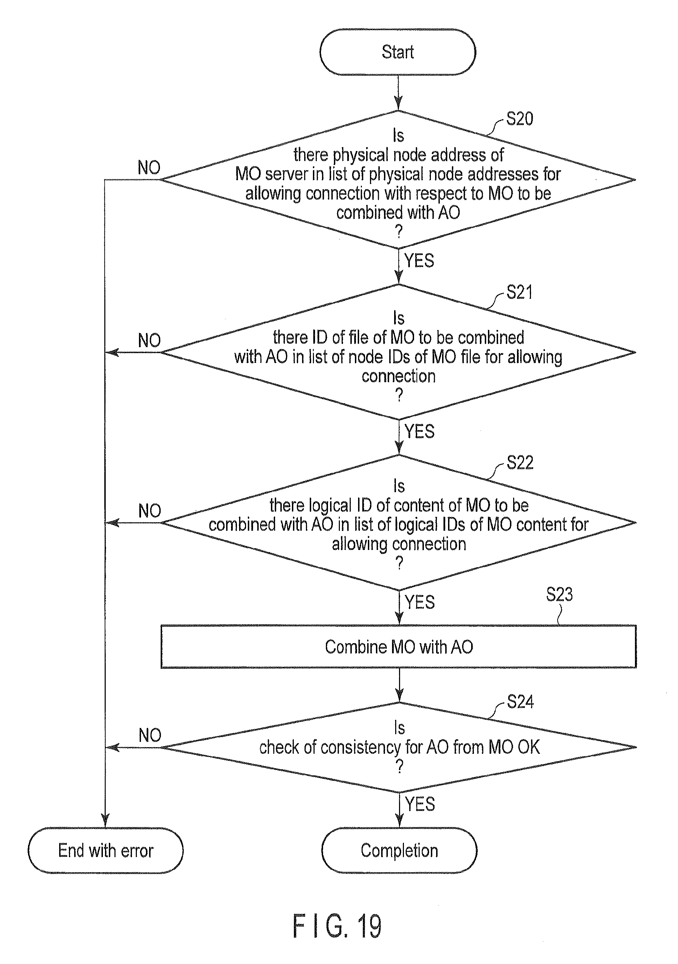

The ontology consistency verification procedure between the AO and the MO will be described with reference to FIG. 19. In step S1, for the MO to be combined with the AO, it is determined whether there is a physical node address of the MO information server in a list of the physical node addresses for allowing a connection. When there is no physical node address, the process ends with an error. In step S2, it is determined whether there is an ID of a file of the MO to be combined with the AO in a list of node IDs of the MO file for allowing the connection. If there is no file ID, the process ends with an error. In step S3, it is determined whether there is a logical ID of content of the MO to be combined with the AO in a list of the logical IDs of the MO content for allowing the connection. When there is no logical ID of the content, the process ends with an error. When all the above determinations are "YES," the MO is combined with the AO in step S4. Next, in step S5, the check of the consistency for the AO from the MO is performed. When the check result is OK, the process is completed. When the AO is not consistent with the MO, the process ends with an error.

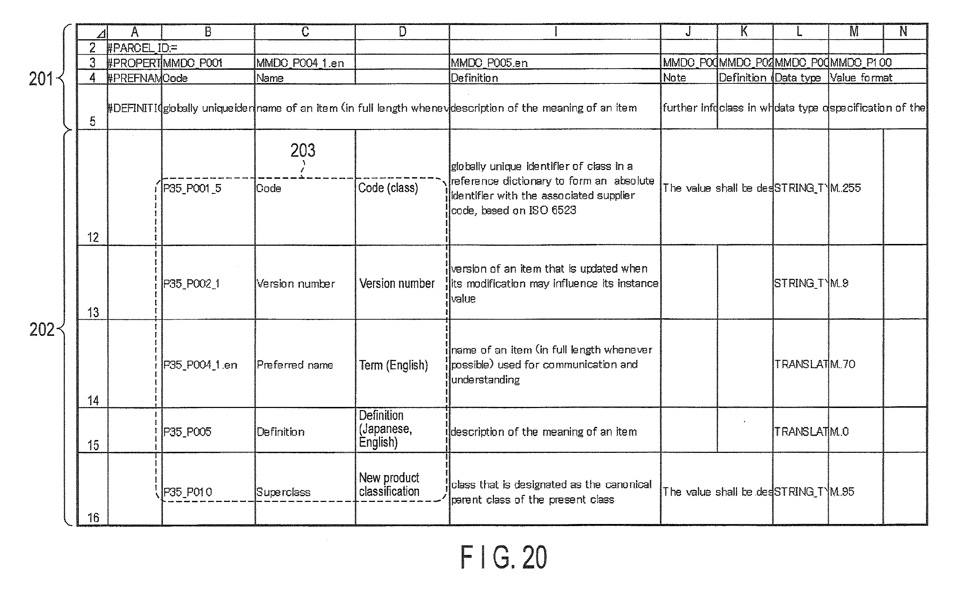

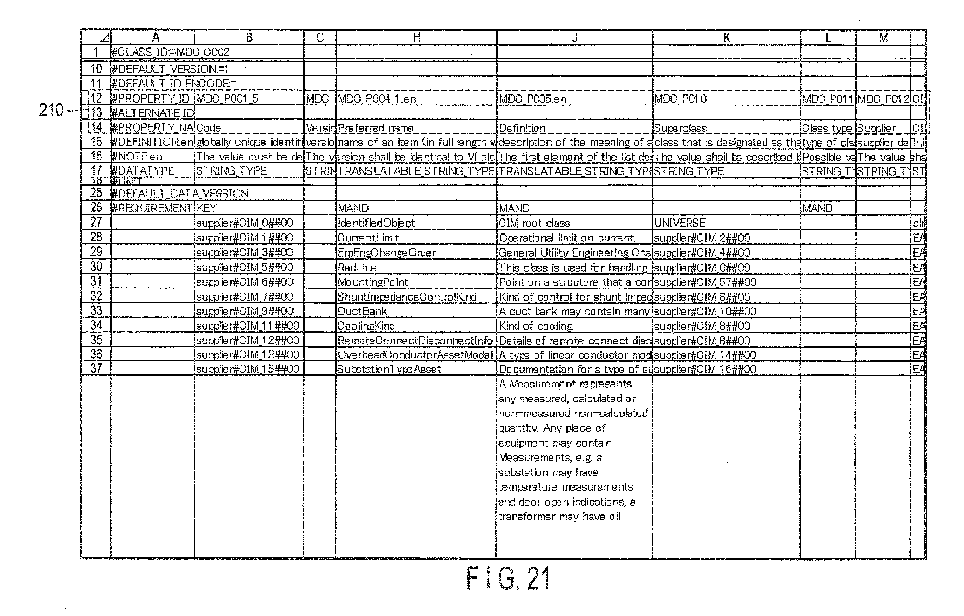

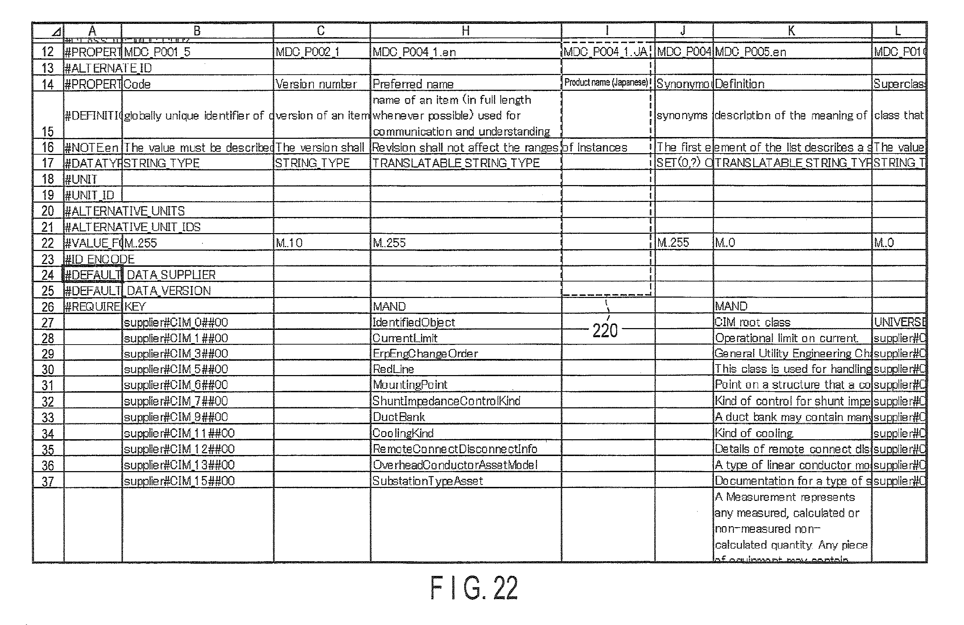

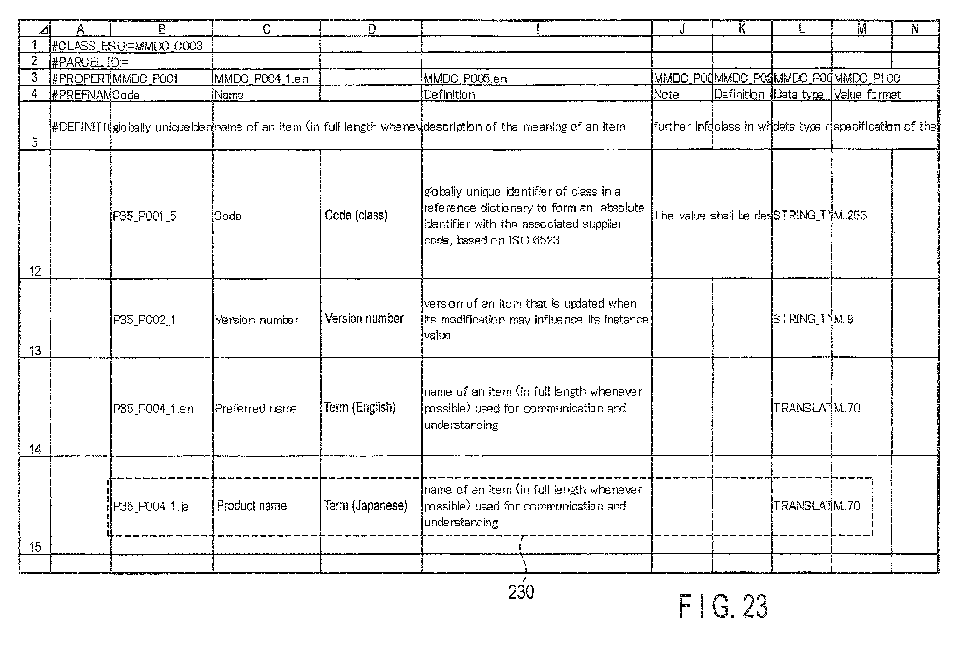

FIG. 20 illustrates a specific example of a CIM MO. In FIG. 20, reference numeral 201 denotes a schema part of the MO, and reference numeral 202 denotes an instance part of the MO. As indicated by reference numeral 203, it can be seen that properties to be used by the DO are defined. FIG. 21 illustrates a specific example of a CIM DO. A description field indicated by reference numeral 201 is defined in the MO. FIG. 22 illustrates another example of the CIM DO. This example corresponds to the case in which a change in the MO is necessary according to a change in the DO. For example, "MDC_P005.en" represents an English name of a product name. Because only English text can be described at present, it is necessary to add a description field for a Japanese product name (for example, "MDC_P004_1.JA" indicated by reference numeral 220). FIG. 23 illustrates an instance addition example of an MO when a change in a CIM MO is necessary according to a change in a DO. According to the change in the DO, it can be seen that an item 230 is newly added to the MO.

A process in this embodiment is implemented as a program executable by a computer, and the program can also be implemented as a computer-readable storage medium. The storage medium may have any storage format such as a magnetic disk, a floppy (registered trademark) disk, a hard disk drive, an optical disc (a compact disc read only memory (CD-ROM), a CD recordable (CD-R), a digital versatile disc (DVD), Blu-ray, or the like), a magneto-optical disc (MO or the like), a semiconductor memory, or the like, so long as the storage medium can store a program and can be read by a computer or a built-in system. An operating system (OS) that runs on a computer based on an instruction of a program installed in a computer or a built-in system from a storage medium; or DB management software, middleware (MW) of a network, and the like, may execute part of each process for implementing the embodiment. The storage medium is not limited to the medium independent of a computer or a built-in system, but also includes storage media into which a program transmitted over a LAN, the Internet, and the like and downloaded is stored or temporarily stored. In addition, the number of storage media is not limited to one. Even when the process in this embodiment is executed by a plurality of media, this is included in the storage media, and the media may have any configuration. The computer or the built-in system is used to execute each process in this embodiment based on a program stored in the storage medium; and may have any configuration of a device including one of a personal computer, a microcomputer, and the like, a system into which a plurality of devices are connected to a network, and the like. The computer is not limited to the personal computer, but also includes a calculation processing device included in information processing equipment, a microcomputer, and the like. Equipment and devices capable of implementing the above-described functions by the program are collectively referred to as a computer.

As described above, according to this embodiment, it is possible to virtually change a CIM without changing a standardized CIM by dividing the CIM into an MO and a DO for description, arranging the MO and the DO of the CIM in different logical nodes (servers), and using a DO into which both correction addition of the DO and the original DO are integrated. It is possible to confirm whether there is violation/omission of a description rule for a changed virtual CIM by checking the DO for the MO. Thereby, safety is increased. A plurality of MOs and DOs may be arranged. It is possible to prevent a person other than corresponding users from inappropriately changing the CIM by changing a combination of the MO and the DO for each other party of provision and use of power requiring a change in the virtual CIM, changing a user name, a password, and an encoding key for accessing content of the MO and the DO, and transmitting them to parties of power supply and demand.

Although some embodiments of the present invention have been described, those embodiments have been presented as examples only, and are not intended to limit the scope of the invention. These novel embodiments can be practiced in various other forms, and various omissions, replacements, and modifications can be made without departing from the spirit of the invention. Such embodiments and modifications are included in the scope and spirit of the invention as well as in the invention described in the claims and their equivalents.

## Claims

1. An ontology update device, which updates a smart grid ontology including an equipment class, individual class properties, or connection information, comprising:
a storage unit configured to store the smart grid ontology including two or three higher-order layers within a domain ontology (DO) layer including specs of the equipment class and the properties, a meta-ontology (MO) layer including specs of metadata of the class and the properties, and an axiomatic ontology (AO) layer including the metadata specs;
an access control unit configured to control access to the ontology so that access is allowed only from a database (DB) or an adapter of a lower-order layer existing in a limited number of specific nodes for a higher-order node; and
an update unit configured to update the DO layer so that the DO layer is consistent with the MO layer,
wherein each of the DO layer, the MO layer, and the AO layer comprises two parts of a schema and an instance and a direct instance of a higher-order layer determines a schema of its lower-order layer,
a schema of the AO layer is recursively described by its own instance,
the equipment class and the properties are stored in separate tables in each of the DO layer, the MO layer, and the AO layer,
a description change in a schema of a layer other than a highest-order layer is possible only when descriptions of instances of its higher-order layers are simultaneously or previously changed, and
the update unit updates a schema of the DO layer consistent with an instance of the MO layer through correction or addition of the instance of the MO layer.

2. The ontology update device according to claim 1,
wherein the correction or addition comprises:
(a) addition or correction serving as a standard for its layer or a plurality of higher-order layers;
(b) addition or correction of an equipment spec specified by another standard; and
(c) addition or correction of an equipment spec out of the standard, and
the ontology update device further comprises:
a transmission unit configured to transmit an instance of a difference in a class definition or a property definition related to the addition or correction and an identifier (ID) of metadata related to the difference instance.

3. The ontology update device according to claim 2,
wherein the difference instance is stored in a server separate from a server that stores a standard ontology connected to the smart grid, and
the transmission unit transmits the difference instance and the ID of the metadata related to the difference instance by transmitting an address of a server in which the difference instance is stored.

4. The ontology update device according to claim 3, wherein a plurality of servers are provided to store the difference instance.

5. The ontology update device according to claim 2, wherein the transmission unit synthesizes information about the correction or addition into a system, converts the information into a resource description framework (RDF) format, and transmits the converted information.
